(19) **Europäisches Patentamt**

**European Patent Office**

**Office européen des brevets**

(11) **EP 0 868 474 B1**

(12) **FASCICULE DE BREVET EUROPEEN**

(45) Date de publication et mention de la délivrance du brevet:
**23.10.2002 Bulletin 2002/43**

(21) Numéro de dépôt: **96943158.4**

(22) Date de dépôt: **20.12.1996**

(51) Int Cl.⁷: **C08K 3/22**, C08K 3/36

(86) Numéro de dépôt international:
**PCT/FR96/02042**

(87) Numéro de publication internationale:
**WO 97/023555 (03.07.1997 Gazette 1997/29)**

(54) **ELASTOMERE SILICONE A HAUTE CONDUCTIBILITE THERMIQUE**

SILIKON-ELASTOMER MIT HOHER WÄRMELEITFÄHIGKEIT

SILICONE ELASTOMER HAVING HIGH HEAT CONDUCTIVITY

(84) Etats contractants désignés:
**AT BE CH DE DK ES FI FR GB GR IE IT LI LU NL PT SE**

(30) Priorité: **22.12.1995 FR 9515776**

(43) Date de publication de la demande:
**07.10.1998 Bulletin 1998/41**

(73) Titulaire: **RHODIA CHIMIE**
**92408 Courbevoie Cédex (FR)**

(72) Inventeurs:
• **DALBE, Bernard**
 **F-69005 Lyon (FR)**
• **GIRAUD, Yves**
 **F-69110 Sainte-Foy-lès-Lyon (FR)**

(74) Mandataire: **Trolliet, Maurice**
**RHODIA SERVICES**
**Direction de la Propriété Industrielle**
**CRIT-Carrières - BP 62**
**69192 Saint-Fons Cédex (FR)**

(56) Documents cités:
 **EP-A- 0 071 328     EP-A- 0 586 153**
 **US-A- 4 518 655**

 • **DATABASE WPI Derwent Publications Ltd., London, GB; AN 81-16540d XP002013837 & JP,A,56 000 834 (SHOWA DENKO) , 7 Janvier 1981 cité dans la demande**

## Description

La présente invention a trait à des élastomères silicones à haute conductibilité thermique ainsi qu'aux compositions organopolysiloxaniques permettant leur obtention. Ces élastomères trouvent notamment leur application dans les matériaux de remplissage pour le transfert thermique, en particulier sur des pièces automobiles et d'électroménager, dans les adhésifs pour composant électroniques et dans les produits bicomposants utilisés dans le moulage.

La conductibilité thermique des matériaux composites est habituellement obtenue par incorporation d'une grande quantité de charge. En règle générale, pour disposer d'un matériau silicone élastomère conducteur thermique, on s'accorde à considérer que le taux volumique de charge doit être supérieur à 35 - 40 % et au plus égal à 65- 70 %. La nature de la charge est choisie en fonction de sa compatibilité avec la matrice polymère, de sa facilité d'incorporation et de sa conductibilité thermique propre.

Les charges sont également choisies en fonction de la destination de l'élastomère final qui peut être soit conducteur électrique soit isolant électrique.

Les principales charges utilisées dans les élastomères silicones à haute conductibilité thermique sont : les oxydes de Be, Si, Al, Zn, Mg, Fe et Ti, les nitrures de bore, d'aluminium, de silicium, le carbure de silicium, le quartz, le carbonate de calcium, le graphite, les fluorures de Ca et de Mg, et les poudres d'Al et de Cu.

Le brevet japonais JP-A-56/000834 décrit l'influence de la répartition de la taille des particules de charges dans l'élastomère sur la conductibilité thermique de celui-ci. Ils utilisent une distribution trimodale de particules d'alumine :

| Composition | Exemple 1 parties en poids | Exemple 2 parties en poids |
|---|---|---|
| Aluminie de 0,8 à 2,5 $\mu$m | 600 | 300 |
| Aluminie de 4 à 18 $\mu$m | 300 | 300 |
| Aluminie de 25 à 40 $\mu$m | 300 | 600 |
| Siloxane | 100 | 100 |
| Peroxyde | 0,4 | 0,4 |
| % de charge dans matériaux (masse) | 92,3 | 92,3 |
| % de charge dans matériaux (volume) | 75 | 75 |
| Conductivité thermique (W/m.K) | 3,7 | 2,3 |

Les auteurs constatent que la conductibilite thermique est améliorée par l'utilisation d'une plus forte quantité de particules de faible diamètre.

Toutefois, la quantité de charges utilisée dans ces élastomères est très importante et les propriétés élastomériques sont perdues ou fortement amoindries. On doit considérer en fait que cette composition ne peut pas être assimilée à un élastomère silicone.

Le brevet US-A-4 518 655 décrit une composition comprenant une huile silicone $\alpha,\omega$-hydroxypolydiméthylsiloxane, de l'alumine tabulaire et de l'alumine calcinée. L'alumine tabulaire est finement divisée et ne doit pas dépasser 100 mesh (soit environ 168 $\mu$m), la plus fine étant indiquée à 325 mesh, soit une taille maximale d'environ 48 $\mu$m. L'exemple cite l'utilisation d'alumine tabulaire de taille comprise entre 100 et 325 mesh. Quant à l'alumine calcinée, sa taille est inférieure au micromètre.

Le problème principal des élastomères à conductibilité thermique consiste donc dans la relation entre la quantité de charges incorporée, qui est le facteur développant la conductibilité thermique du matériau, et les propriétés élastomériques, qui sont inversement proportionnelles à la quantité de charges. Le problème est donc d'autant plus difficile à résoudre que la conductibilité thermique recherchée est élevée.

De manière générale, les vrais élastomères de silicone industriels conducteurs de la chaleur ont une conductivité thermique mesurée à 25°C par la méthode "Flash" (N.J. Parker et al., J. of Applied Physics, 32, p. 1679-1684, 1961) comprise entre 0,8 et 1,2 W/m.K.

La présente invention a donc pour objectif de développer un matériau élastomérique à forte conductivité thermique, pouvant atteindre et même dépasser 1,2 W/m.K, donc fortement chargé, mais qui conserve des propriétés élastomériques et notamment un allongement à la rupture (mesuré selon la norme ISO R37 à 25°C avec des éprouvettes de type H2) tout à fait satisfaisant et en particulier supérieur à 30 %.

Un autre objectif de l'invention est de développer de tels matériaux sur la base soit de charges conductrices de l'électricité, soit de charges ayant des propriétés d'isolant électrique.

Contrairement à l'enseignement du brevet japonais cité plus haut, la Demanderesse a trouvé de manière surprenante que plus on augmentait la taille des particules de la charge, meilleure était la conductibilité thermique du matériau élastomérique la comprenant et que cette conductibilité, ainsi que la compacité du matériau, pouvaient être encore améliorées par l'incorporation de particules de charges plus petites.

La Demanderesse a en outre trouvé un compromis optimal entre conductibilité thermique élevée et caractère élastomérique en limitant la taille des particules de charge.

La Demanderesse a encore observé un effet de synergie résultant de la combinaison de particules de grosse taille en quantité majoritaire, et de particules de petite taille.

Enfin, l'obtention du résultat recherché est passé par la détermination du volume de charge à incorporer, c'est-à-dire du volume qui sera occupé par la charge dans l'élastomère final.

La présente invention a donc pour objet une composition polyorganosiloxanique conduisant à un élastomère silicone à forte conductivité thermique, pouvant atteindre et même dépasser 1,2 W/m.K et conservant un allongement à la rupture supérieur à 30 %, comprenant au moins un polyorganosiloxane fonctionnel (I) réticulant par une réaction de polyaddition, polycondensation ou par voie radicalaire, éventuellement un polyorganohydrogénosiloxane (II), un catalyseur (III) et au moins une charge pulvérulente (IV) destinée à accroître la conductibilité thermique de l'élastomère final, ainsi que, éventuellement, une charge de renforcement (V), caractérisée en ce que la charge (IV) destinée à augmenter la conductibilité thermique est présente dans la composition à raison de 45 à 65 % et plus préférentiellement de 50 à 60 %, par rapport à la composition totale, en ce que cette charge comprend au moins deux groupes de particules de diamètres moyens très différents, un premier groupe ayant un diamètre moyen de particules compris entre 10 et 40 μm, de préférence de 15 à 35 μm, présent en quantité de l'ordre de 60 à 90 % en volume, de préférence de l'ordre de 75 à 90 % en volume par rapport à la quantité totale de charges et un deuxième groupe ayant un diamètre moyen de particules inférieur à 5 μm, de préférence compris entre 0,1 et 5 μm.

De manière préférée, lorsque l'on parle d'un groupe de particules ayant un diamètre moyen compris dans un intervalle donné, il faut comprendre que plus de 50 % en poids des particules a un diamètre compris dans l'intervalle (de 50 à 100 % en poids des particules).

Selon une modalité avantageuse de l'invention, les particules de petite taille peuvent se répartir selon une distribution bimodale, en particulier avec un premier domaine de diamètre moyen compris entre 1 μm et 5 μm, notamment de l'ordre de 2 μm et un deuxième domaine avec un diamètre moyen de particules compris entre 0,1 μm et 0,5 μm notamment de l'ordre de 0,2 μm.

La répartition entre particules du premier domaine et particules du deuxième domaine est de préférence de 85 à 95 % en volume pour les premières et de 5 à 15 % en volume pour les secondes.

Les charges (IV) préférées sont le quartz broyé, $Al_2O_3$, MgO, ZnO et mélanges de celles-ci.

Les polyorganosiloxanes (I) et les polyorganohydrogénosiloxanes éventuels (II), constituants principaux des compositions selon l'invention, sont constitués de motifs siloxyles de formule générale :

$$Z_x R_y SiO_{\frac{4-n(x+y)}{2}} \tag{1}$$

éventuellement tous les autres motifs étant des motifs siloxyles de formule moyenne :

$$R_n SiO_{\frac{4-n}{2}} \tag{2}$$

formules dans lesquelles les divers symboles ont la signification suivante :

- les symboles R, identiques ou différents, représentent chacun un groupement de nature hydrocarbonée non hydrolysable, ce radical pouvant être :

  * un radical alkyle, halogénoalkyle ayant de 1 à 5 atomes de carbone et comportant de 1 à 6 atomes de chlore et/ou de fluor,
  * des radicaux cycloalkyles et halogénocycloalkyles ayant de 3 à 8 atomes de carbone et contenant de 1 à 4 atomes de chlore et/ou de fluor,
  * des radicaux aryles, alkylaryles et halogénoaryles ayant de 6 à 8 atomes de carbone et contenant de 1 à 4 atomes de chlore et/ou de fluor,
  * des radicaux cyanoalkyles ayant de 3 à 4 atomes de carbone ;

- les symboles Z, identiques ou différents, représentent un atome d'hydrogène, un groupement alcényle, un groupement hydroxyle, un atome hydrolysable, un groupement hydrolysable ;
- n = un nombre entier égal à 0, 1, 2 ou 3 ;

- x = un nombre entier égal à 0, 1, 2 ou 3 ;
- y = un nombre entier égal à 0, 1 ou 2 ;
- la somme x + y est comprise entre 1 et 3.

A titre illustratif, on peut citer les radicaux organiques R, directement liés aux atomes de silicium : les groupes méthyle ; éthyle ; propyle ; isopropyle ; butyle ; isobutyle ; n-pentyle ; t-butyle ; chlorométhyle ; dichlorométhyle ; $\alpha$-chloroéthyle ; $\alpha,\beta$-dichloroéthyle ; fluorométhyle ; difluorométhyle, $\alpha,\beta$-difluoroéthyle ; trifluoro-3,3,3 propyle ; trifluorocyclopropyle ; trifluoro-4,4,4 butyle ; hexafluoro-3,3,4,4,5,5 pentyle ; $\beta$-cyanoéthyle ; $\gamma$-cyanopropyle ; phényle ; p-chlorophényle ; m-chlorophényle ; dichloro-3,5 phényle ; trichlorophényle ; tétrachlorophényle ; o-, p-, ou m-tolyle ; $\alpha,\alpha,\alpha$-trifluorotolyle ; xylyles comme diméthyl-2,3 phényle, diméthyl-3,4 phényle.

Préférentiellement, les radicaux organiques R liés aux atomes de silicium sont des radicaux méthyle, éthyle, propyle et phényle, ces radicaux pouvant être éventuellement halogénés.

Les compositions organopolysiloxanes bicomposantes ou monocomposantes réticulant à température ambiante ou à la chaleur par des réactions de polyaddition, essentiellement par réaction de groupements hydrogéno-silylés sur des groupements alkényl-silylés, en présence généralement d'un catalyseur métallique, de préférence au platine, sont décrites par exemple dans les brevets US-A-3 220 972, 3 284 406, 3 436 366, 3 697 473 et 4 340 709. Les organopolysiloxanes entrant dans ces compositions sont donc constitués par des couples à base d'une part d'au moins un polysiloxane linéaire, ramifié ou cyclique (I), constitué de motif(s) (1) dans lesquels le reste Z représente un groupement alcényle en $C_2$-$C_6$, de préférence vinyle, éventuellement associés à des motifs (2), et d'autre part d'au moins un hydrogénopolysiloxane (II) linéaire, ramifié ou cyclique, constitué de motifs (1) dans lesquels le reste Z représente alors un atome d'hydrogène, éventuellement associés à des motifs (2).

De manière générale, pour ce type de compositions de polyaddition,

- les symboles Z représentent un atome d'hydrogène (composé II) ou un groupement alcényle en $C_2$-$C_6$ (composé I) ;
- x = un nombre entier égal à 1 ou 2 ;
- y = un nombre entier égal à 0, 1 ou 2 ;
- la somme x + y est comprise entre 1 et 3 ;
- n = un nombre entier égal à 0, 1, 2 ou 3.

Des exemples de motifs siloxyles de formule (1) où Z = alkényle sont : les motifs vinyldiméthylsiloxyle, vinylphénylsiloxyle ; vinylsiloxyle et vinylméthylsiloxyle.

Des exemples de motifs siloxyles de formule (1) où Z = H sont : les motifs $H(CH_3)_2SiO_{1/2}$, $HCH_3SiO_{2/2}$ et $H(C_6H_5)SiO_{2/2}$.

Des exemples de motifs siloxyles de formule (2) sont : les motifs $SiO_{4/2}$, triméthylsiloxyle, diméthylsiloxyle, méthylphénylsiloxyle, diphénylsiloxyle, méthylsiloxyle et phénylsiloxyle.

Des exemples de polyorganosiloxanes (I) sont : les diméthylpolysiloxanes à extrémités diméthyl-vinylsilyles, les copolymères (méthylvinyl)(diméthyl)polysiloxanes à extrémités triméthylsilyles, les copolymères (méthylvinyl)(diméthyl)polysiloxanes à extrémités diméthylvinylsilyles, les méthylvinylpolysiloxanes à extrémités diméthylvinylsilyles, les méthylvinylpolysiloxanes cycliques.

Des exemples de polyorganosiloxanes (II) sont : les copolymères (diméthyl)(hydrogénométhyl)polysiloxanes à extrémités triméthylsilyles, les copolymères (diméthyl)(hydrogénométhyl)siloxanes à extrémités hydrogénodiméthylsilyles, les hydrogénométhylpolysiloxanes à extrémités hydrogénodiméthylsilyles ou à extrémités triméthylsilyles, les hydrogénométhylpolysiloxanes cycliques, tous ces composés ayant par molécule au moins trois motifs siloxyles porteurs d'un atome d'hydrogène lié au silicium.

Les composés (I) possèdent généralement une viscosité dynamique à 25°C inférieure à 500 000mPa.s et de préférence comprise entre 100 et 100 000 mPa.s. Les composés (II) possèdent généralement une viscosité dynamique à 25°C inférieure à 10 000 mPa.s et de préférence comprise entre 5 et 1000 mPa.s.

Des composés (I) et (II) qui conviennent particulièrement bien sont des polyorganosiloxanes essentiellement linéaires, ayant des viscosités telles que celles définies ci-avant, consistant:

- pour les composés (I) : dans des huiles diméthylpolysiloxanes $\alpha,\omega$-divinylées, et
- pour les composés (II) : dans des huiles hydrogénométhylpolysiloxanes à extrémités hydrogénodiméthylsilyles ou à extrémités triméthylsilyles.

De manière pratique et usuelle, chaque composé (I) et (II) peut être formé par des mélanges d'huiles ayant des caractéristiques différentes.

La composition de polyaddition peut aussi comprendre un polyorganosiloxane allongeant présentant, par molécule, deux groupements siloxyles porteurs d'un atome d'hydrogène lié au silicium. Ces polyorganosiloxanes allongeants sont parfaitement connus de l'homme du métier.

Les compositions organopolysiloxanes bicomposantes ou monocomposantes réticulant à température ambiante par des réactions de polycondensation sous l'action de l'humidité, en présence généralement d'un catalyseur métallique, par exemple un composé de l'étain ou du titane, sont décrites par exemple pour les compositions monocomposantes dans les brevets US-A-3 065 194, 3 542 901, 3 779 986, 4 417 042, et dans le brevet FR-A-2 638 752, et pour les compositions bicomposantes dans les brevets US-A-3 678 002, 3 888 815, 3 993 729 et 4 064 096. Les organopolysiloxanes entrant dans ces compositions sont en général des polysiloxanes linéaires, ramifiés ou réticulés constitués de motifs (1) dans lesquels le reste Z est un groupement hydroxyle ou un atome ou un groupement hydrolysable et où x est au moins égal à 1, avec la possibilité d'avoir au moins un reste Z qui représente un groupement hydroxyle ou un atome ou un groupement hydrolysable et au moins un reste Z qui représente un groupement alcényle en $C_2$ - $C_6$ quand x est égal à 2 ou 3, lesdits motifs (1) étant éventuellement associés à des motifs (2). En ce qui concerne le constituant polysiloxane à motifs (1) et éventuellement (2), il peut s'agir d'une huile de viscosité dynamique à 25°C comprise entre 200 et 500 000 mPa.s. De pareilles compositions peuvent contenir en outre un agent de réticulation qui est normalement un silane portant au moins trois groupements hydrolysables comme par exemple un silicate, un alkyltrialkoxysilane ou un aminoalkyltrialkoxysilane.

La composition de polycondensation peut aussi comprendre un silane portant deux groupements hydrolysables et servant de silane allongeant. Ces silanes difonctionnels sont parfaitement connus de l'homme du métier.

Il peut aussi s'agir (voie radicalaire) de compositions durcissables à température élevée, sous l'action de péroxydes organiques tels que le péroxyde de dichloro-2,4 benzoyle, le péroxyde de benzoyle, le perbenzoate de t-butyle, le péroxyde de cumyle, le péroxyde de di-t-butyle.

L'organopolysiloxane entrant dans de telles compositions (connues sous l'appellation EVC = Elastomère Vulcanisable à Chaud) est alors constitué essentiellement de motifs siloxyles (2) éventuellement associés à des motifs (1) dans lesquels le reste Z représente un groupement alcényle en $C_2$ - $C_6$ et où x est égal à 1, et ne contient pas de groupes ou d'atomes hydrolysables. De tels EVC sont par exemple décrits dans les brevets US-A-3 142 655, 3 821 140, 3 836 489 et 3 839 266.

Les diméthylpolysiloxanes terminés par des groupements triméthylsilyles ou diméthylvinylsilyles représentent un exemple particulièrement important de cette catégorie sur le plan industriel.

Les compositions polyorganosiloxaniques selon l'invention peuvent encore comprendre les additifs usuels permettant d'en améliorer la mise en oeuvre.

Les charges de renforcement (V) sont les charges habituellement utilisées dans les compositions polyorganosiloxaniques. Elles ont en général un diamètre moyen de particules inférieur à 0,05 µm. Elles peuvent être siliceuses, notamment choisies parmi les silices de combustion ou de précipitation, éventuellement traitées par un composé organosilicique habituellement utilisé pour cet usage. Parmi ces composés, figurent les méthylpolysiloxanes tels que l'hexaméthyldisiloxane, l'octaméthylcyclotétrasiloxane, les méthylpolysilazanes tels que l'hexaméthyldisilazane, l'hexaméthylcyclotrisilazane, les chlorosilanes tels que le diméthyldichlorosilane, le triméthylchlorosilane, le méthylvinyldichlorosilane, le diméthylvinylchlorosilane, les alcoxysilanes tels que le diméthyldiméthoxysilane, le diméthylvinyléthoxysilane, le triméthylméthoxysilane. On peut aussi utiliser des charges non siliceuses usuelles.

Les compositions polyorganosiloxaniques selon l'invention peuvent encore comprendre les additifs usuels permettant de conserver les propriétés élastomériques à un haut niveau dans les applications où se développent de hautes températures ; on citera par exemple, comme additifs de ce type, l'oxyde de cérium et l'octoate (ou éthyl-2 hexanoate) de cérium. On peut utiliser de 0,01 à 1 % en poids de pareil(s) additif(s) par rapport au poids de la composition totale.

La présente invention a encore pour objet des élastomères silicones à haute conductibilité thermique obtenus à partir des compositions organopolysiloxaniques selon l'invention.

L'invention va être maintenant décrite plus en détail à l'aide d'un exemple de réalisation de l'invention.

Exemple de préparation d'un élastomère conducteur thermique avec distribution bimodale de charge :

Dans un malaxeur à bras de 5 l (type Meilli), on charge 100 parties en poids d'un. mélange 50 / 50 en poids d'huiles polydiméthylsiloxane α,ω-hydroxylées de viscosité 3 500 mPa.s et 750 mPa.s. On additionne 1,5 partie en poids de silice de combustion de surface spécifique 150 $m^2$ / g et 2 parties en poids d'octoate de cérium à 12 % en poids de produit pur. On malaxe pendant environ 30 minutes puis on incorpore en 15 minutes 50 parties en poids de Sifraco C600. Ensuite, on incorpore en 45 minutes 350 parties en poids de Sifraco C10. On agite sous vide ($53,2.10^2$ Pa) pendant 1 heure, puis on additionne 6 parties en poids d'éthyltriacétoxysilane et 0,018 partie en poids d'(isopropoxy) (butoxy) bis-(acétylacétonate) de titane. On malaxe 5 minutes sous vide.

Sifraco C600 (diamètre moyen 2 µm ; densité 2,65) et C10 (diamètre 25 µm ; densité 2,65) sont constitués de quartz broyé et sont commercialisés par la société Sifraco - (Paris, FRANCE).

On obtient un élastomère de densité 1,95 contenant 57,8 % en volume de quartz broyé (constitué par un mélange de 12,5 % en volume de Sifraco C600 avec 87,5 % en volume de Sifraco C10), ledit élastomère ayant les propriétés suivantes :

- conductivité thermique : 1,28 W/m.K
- résistance à la rupture : 5,9 MPa
- allongement à la rupture : 50 %
- dureté Shore A : 88

**Revendications**

1. Composition polyorganosiloxanique conduisant à un élastomère silicone à forte conductivité thermique, pouvant atteindre et même dépasser 1,2 W/m.K et conservant un allongement à la rupture supérieur à 30 %, comprenant au moins un polyorganosiloxane fonctionnel (I) réticulant par une réaction de polyaddition, polycondensation ou par voie radicalaire, éventuellement un polyorganohydrogénosiloxane (II), un catalyseur (III) et au moins une charge pulvérulente (IV) destinée à accroître la conductibilité thermique de l'élastomère final, ainsi que, éventuellement, une charge de renforcement (V), **caractérisée en ce que** la charge (IV) destinée à augmenter la conductibilité thermique est présente dans la composition à raison de 45 à 65 % en volume, par rapport à la composition totale, **en ce que** cette charge comprend au moins deux groupes de particules de diamètres moyens très différents, un premier groupe ayant un diamètre moyen de particules compris entre 10 et 40 $\mu$m, présent en quantité de l'ordre de 60 à 90 % en volume par rapport à la quantité totale de charges, et un deuxième groupe ayant un diamètre moyen de particules inférieur à 5 $\mu$m.

2. Composition selon la revendication 1, **caractérisée en ce que** les particules du premier groupe sont présentes à raison d'une quantité de l'ordre de 75 à 90 % en volume par rapport à la quantité totale de charges destinées à accroître la conductibilité thermique.

3. Composition selon la revendication 1 ou 2, **caractérisée en ce que** la charge destinée à augmenter la conductibilité thermique est présente dans la composition à raison de 50 à 60 % en volume par rapport à la composition totale.

4. Composition selon l'une quelconque des revendications 1 à 3, **caractérisée en ce que** les particules du premier groupe ont un diamètre moyen compris entre 15 et 35 $\mu$m.

5. Composition selon l'une quelconque des revendications 1 à 4, **caractérisée en ce que** les particules du deuxième groupe ont un diamètre moyen compris entre 0,1 et 5 $\mu$m.

6. Composition selon l'une quelconque des revendications 1 à 5, **caractérisée en ce que** les particules du deuxième groupe se répartissent selon une distribution bimodale.

7. Composition selon la revendication 6, **caractérisée en ce que** les particules de petites tailles se distribuent en un premier domaine correspondant à des particules de diamètre moyen compris entre 1 $\mu$m et 5 $\mu$m et en un deuxième domaine correspondant à des particules de diamètre moyen compris entre 0,1 $\mu$m et 0,5 $\mu$m.

8. Composition selon la revendication 7, **caractérisée en ce que** les particules du premier domaine ont un diamètre moyen de l'ordre de 2 $\mu$m.

9. Composition selon la revendication 7 ou 8, **caractérisée en ce que** les particules du deuxième domaine ont un diamètre moyen de l'ordre de 0,2 $\mu$m.

10. Composition selon l'une quelconque des revendications 6 à 9, **caractérisée en ce que** les particules du premier domaine sont présentes à raison de 85 à 95 % en volume par rapport au total des particules des premier et deuxième domaines.

11. Composition selon l'une quelconque des revendications 1 à 10, **caractérisée en ce que** les charges (IV) destinées à augmenter la conductibilité thermique sont choisies parmi le groupe consistant en : quartz broyé, $Al_2O_3$, MgO, ZnO et mélanges de celles-ci.

12. Elastomère silicone à haute conductibilité thermique obtenu à partir d'une composition polyorganosiloxanique selon l'une quelconque des revendications 1 à 11.

## Claims

1. Polyorganosiloxane composition resulting in a silicone elastomer of high thermal conductivity, which can reach and even exceed 1.2 w/m.K, the elastomer retaining an elongation at break of greater than 30 %, comprising at least one functional polyorganosiloxane (I) which crosslinks by a polyaddition or polycondensation reaction or by the radical route, optionally a polyorganohydrosiloxane (II), a catalyst (III) and at least one pulverulent filler (IV) intended to increase the thermal conductivity of the final elastomer, as well as, optionally, a reinforcing filler (V), **characterized in that** the filler (IV) intended to increase the thermal conductivity is present in the composition in the proportion of 45 to 65 % by volume with respect to the total composition and **in that** this filler comprises at least two groups of particles of very different mean diameters, a first group having a mean particle diameter of between 10 and 40 µm, present in an amount of the order of 60 to 90 % by volume with respect to the total amount of fillers, and a second group having a mean particle diameter of less than 5 µm.

2. Composition according to Claim 1, **characterized in that** the particles of the first group are present in the proportion of an amount of the order of 75 to 90 % by volume with respect to the total amount of fillers intended to increase the thermal conductivity.

3. Composition according to Claim 1 or 2, **characterized in that** the filler intended to increase the thermal conductivity is present in the composition in the proportion of 50 to 60 % by volume with respect to the total composition.

4. Composition according to any one of Claims 1 to 3, **characterized in that** the particles of the first group have a mean diameter of between 15 and 35 µm.

5. Composition according to any one of Claims 1 to 4, **characterized in that** the particles of the second group have a mean diameter of between 0.1 and 5 µm.

6. Composition according to any one of Claims 1 to 5, **characterized in that** the particles of the second group are distributed according to a bimodal distribution.

7. Composition according to Claim 6, **characterized in that** the small-sized particles are distributed in a first domain corresponding to particles with a mean diameter of between 1 µm and 5 µm and in a second domain corresponding to particles with a mean diameter of between 0.1 µm and 0.5 µm.

8. Composition according to Claim 7, **characterized in that** the particles of the first domain have a mean diameter of the order of 2 µm.

9. Composition according to Claim 7 or 8, **characterized in that** the particles of the second domain have a mean diameter of the order of 0.2 µm.

10. Composition according to any one of Claims 6 to 9, **characterized in that** the particles of the first domain are present in the proportion of 85 to 95 % by volume with respect to the total of the particles of the first and second domains.

11. Composition according to any one of Claims 1 to 10, **characterized in that** the fillers (IV) intended to increase the thermal conductivity are chosen from the group comprising: ground quartz, $Al_2O_3$, MgO, ZnO and mixtures of these.

12. Silicone elastomer of high thermal conductivity obtained from a polyorganosiloxane composition according to any one of Claims 1 to 11.

## Patentansprüche

1. Polyorganosiloxan-Zusammensetzung, die zu einem Silicon-Elastomer mit hoher thermischer Leitfähigkeit führt, die 1,2 W/m.K erreichen und sogar überschreiten kann, und das eine Reißdehnung von über 30 % beibehält, umfassend mindestens ein funktionelles Polyorganosiloxan (I), das durch eine Reaktion der Polyaddition. der Polykondensation oder auf dem Radikalweg vernetzt, gegebenenfalls ein Polyorganohydrogensiloxan (II), einen Katalysator (III) und mindestens einen pulverformigen Füllstoff (IV), der dazu vorgesehen ist, die thermische Leitfähigkeit des fertigen Elastomers zu steigern, sowie gegebenenfalls einen Füllstoff zur Verstärkung (V), **dadurch gekennzeichnet, daß** der Füllstoff (IV), der dazu vorgesehen ist, die thermische Leitfähigkeit zu steigern, in der Zusammensetzung im Verhältnis von 45 Vol.-% bis 65 Vol.-% anwesend ist, bezogen auf die Gesamtzusammensetzung, und daß dieser Füllstoff mindestens zwei Gruppen von Teilchen mit einem sehr unterschiedlichen mittleren Durchmesser umfaßt, eine erste Gruppe mit einem mittleren Teilchen-Durchmesser zwischen 10 µm und 40 µm, die in einer Menge in der Größenordnung von 60 Vol.-% bis 90 Vol.-% vorliegt, bezogen auf die Gesamtmenge der Füllstoffe, und eine zweite Gruppe mit einem mittleren Teilchen-Durchmesser von unter 5 µm.

2. Zusammensetzung nach Anspruch 1, **dadurch gekennzeichnet, daß** die Teilchen der ersten Gruppe im Verhältnis einer Menge in der Größenordnung von 75 Vol.-% bis 90 Vol.-% vorliegen, bezogen auf die Gesamtmenge der Füllstoffe, die dazu vorgesehen sind, die thermische Leitfähigkeit zu steigern.

3. Zusammensetzung nach Anspruch 1 oder 2, **dadurch gekennzeichnet, daß** der Füllstoff, der dazu vorgesehen ist, die thermische Leitfähigkeit zu steigern, in der Zusammensetzung in einem Verhältnis von 50 Vol.-% bis 60 Vol.-% vorliegt, bezogen auf die Gesamtzusammensetzung.

4. Zusammensetzung nach irgendeinem der Ansprüche 1 bis 3, **dadurch gekennzeichnet, daß** die Teilchen der ersten Gruppe einen mittleren Durchmesser zwischen 15 µm und 35 µm besitzen.

5. Zusammensetzung nach irgendeinem der Ansprüche 1 bis 4, **dadurch gekennzeichnet, daß** die Teilchen der zweiten Gruppe einen mittleren Durchmesser zwischen 0,1 µm und 5 µm besitzen.

6. Zusammensetzung nach irgendeinem der Ansprüche 1 bis 5, **dadurch gekennzeichnet, daß** sich die Teilchen der zweiten Gruppe gemäß einer bimodalen verteilung aufteilen.

7. Zusammensetzung nach Anspruch 6, **dadurch gekennzeichnet, daß** sich die Teilchen mit geringer Größe in einen ersten Bereich, der den Teilchen mit einem mittleren Durchmesser zwischen 1 µm und 5 µm entspricht und in einen zweiten Bereich aufteilen, der den Teilchen mit einem mittleren Durchmesser zwischen 0,1 µm und 0,5 µm entspricht.

8. Zusammensetzung nach Anspruch 7, **dadurch gekennzeichnet, daß** die Teilchen des ersten Bereiches einen mittleren Durchmesser in der Größenordnung von 2 µm besitzen.

9. Zusammensetzung nach Anspruch 7 oder 8, dadurch gekennzeichnec, daß die Teilchen des zweiten Bereiches einen mittleren Durchmesser in der Größenordnung von 0,2 µm besitzen.

10. Zusammensetzung nach irgendeinem der Ansprüche 6 bis 9, **dadurch gekennzeichnet, daß** die Teilchen des ersten Bereiches in einem Verhältnis von 85 Vol.-% bis 95 Vol.-% vorliegen, bezogen auf die Gesamtheit der Teilchen des ersten und des zweiten Bereiches.

11. Zusammensetzung nach irgendeinem der Ansprüche 1 bis 10, **dadurch gekennzeichnet, daß** die Füllstoffe (IV), die dazu vorgesehen sind, die thermische Leitfähigkeit zu steigern, aus der Gruppe gewählt werden, die besteht aus: gebrochenem Quarz, $Al_2O_3$, MgO, ZnO und deren Mischungen.

12. Silicon-Elastomer mit hoher thermischer Leitfähigkeit, erhalten ausgehend von einer Polyorganosiloxan-Zusammensetzung nach irgendeinem der Ansprüche 1 bis 11.